# EUROPEAN PATENT APPLICATION

(11) **EP 4 660 683 A1**
(43) Date of publication of application: **10.12.2025**
(21) Application number: 23924269.6
(22) Date of filing: 27.12.2023
(51) Int. Cl.: G02B 21/36, G01N 21/64, G02B 21/06

(54) **IMAGE ACQUISITION DEVICE AND IMAGE ACQUISITION METHOD**

(30) Priority: 24.02.2023 JP 2023027527
(71) Applicant: Hamamatsu Photonics K.K., Hamamatsu-shi, Shizuoka 435-8558 (JP)
(72) Inventor: IKEMURA Kenichiro, Hamamatsu-shi, Shizuoka 435-8558 (JP); KOBAYASHI Masanori, Hamamatsu-shi, Shizuoka 435-8558 (JP); SHOYAMA Ryosuke, Hamamatsu-shi, Shizuoka 435-8558 (JP); IWAMURA Takumi, Hamamatsu-shi, Shizuoka 435-8558 (JP)
(74) Representative: Hoffmann Eitle
(86) International application number: PCT/JP2023/047071
(87) International publication number: WO 2024/176626

(57) **Abstract**

The image acquisition apparatus is an image acquisition apparatus to acquire a macro image of the sample, and includes the second emission unit configured to obliquely emit excitation light in at least 1 excitation wavelength range among a plurality of excitation wavelength ranges onto the sample, a macro observation camera including a fluorescence filter unit having a plurality of reflection wavelength ranges corresponding to the plurality of excitation wavelength ranges and a transmission wavelength range between the reflection wavelength ranges, an imaging lens configured to form an image of fluorescence from the sample corresponding to the emitted excitation light, and an image sensor configured to capture an optical image formed by the imaging lens and output fluorescence macro image of the sample, and a control apparatus configured to set an acquisition condition of a micro image of the sample based on the fluorescence macro image.

## Description

### Technical Field

The present disclosure relates to an image acquisition apparatus and an image acquisition method.

### Background Art

Patent Literature 1 describes acquisition of a dark-field macro image by dark-field illumination and setting of micro image acquisition conditions based on the dark-field macro image.

### Citation List

### Patent Literature

Patent Literature 1: Japanese Unexamined Patent Publication No. 2007-310231

### Summary of Invention

### Technical Problem

Conventionally, it is required to acquire a clearer macro image and more appropriately set a micro image acquisition condition.

The present disclosure has been made in view of the above circumstances, and an object of the present disclosure is to more appropriately set a micro image acquisition condition.

### Solution to Problem

An image acquisition apparatus according to one aspect of the present disclosure is an image acquisition apparatus to acquire a macro image of a specimen, the image acquisition apparatus including: an excitation light emission unit configured to obliquely emit excitation light in at least 1 excitation wavelength range among a plurality of excitation wavelength ranges onto the specimen; a macro observation camera including a fluorescence filter unit having a plurality of reflection wavelength ranges corresponding to the plurality of excitation wavelength ranges and a transmission wavelength range between the reflection wavelength ranges, an imaging lens configured to form an image of fluorescence from the specimen corresponding to the emitted excitation light, and an image sensor configured to capture an optical image formed by the imaging lens and output fluorescence macro image data of the specimen; and a setting unit configured to set an acquisition condition of a micro image of the specimen, based on the fluorescence macro image data.

An image acquisition method according to one aspect of the present disclosure is an image acquisition method to acquire a macro image of a specimen, the method including: an excitation light emission step of obliquely emitting excitation light in at least 1 excitation wavelength range among a plurality of excitation wavelength ranges onto the specimen; an imaging step of imaging, using an image sensor, fluorescence generated from the specimen in response to the emitted excitation light and transmitted through a fluorescence filter unit having a plurality of reflection wavelength ranges corresponding to the plurality of excitation wavelength ranges and a transmission wavelength range between the reflection wavelength ranges, and outputting fluorescence macro image data of the specimen; and a setting step of setting an acquisition condition of a micro image of the specimen, based on the fluorescence macro image data.

In the image acquisition apparatus and the image acquisition method according to one aspect of the present disclosure, the specimen is obliquely irradiated with the excitation light, and the optical image of the fluorescence from the specimen through the fluorescence filter unit that reflects the light in the excitation wavelength range and the imaging lens is imaged by the image sensor, and the fluorescence macro image data of the specimen is output. As described above, by emitting the specimen with the excitation light obliquely, in the configuration in which the macro observation camera is provided immediately above the specimen, the fluorescence from the specimen is appropriately imaged by the image sensor. In addition, since the light in the excitation wavelength range is reflected by the fluorescence filter unit in the preceding stage of the image sensor, only the fluorescence not including the excitation light is appropriately imaged by the image sensor. By outputting the fluorescence macro image data captured in this manner and setting the acquisition condition of the micro image of the specimen, the acquisition condition of the micro image can be appropriately set. That is, since only the fluorescence is imaged by the image sensor through the fluorescence filter unit, the tissue in the specimen is clearly detected based on the fluorescence macro image data, the region detection of the tissue, the setting of the focus measurement position, and the like are appropriately performed, and the acquisition condition of the micro image can be appropriately set.

The setting unit may set exposure time at the time of acquiring the micro image, based on the fluorescence macro image data. As described above, since the tissue of the specimen is clearly detected from the macro image data output from the macro observation camera, it is possible to set the appropriate exposure time at the time of acquiring the micro image with high accuracy based on the macro image data.

The setting unit may extract a predetermined number of checkpoints having higher luminance than other regions in the fluorescence macro image data, and set the exposure time based on the luminance of the plurality of extracted checkpoints. As described above, the exposure time is set in consideration of the luminance of the checkpoints, whereby the exposure time can be set with higher accuracy.

The excitation light emission unit may emit excitation light for each excitation wavelength range, the image sensor may be a color image sensor, the color image sensor may output fluorescence macro image data corresponding to each excitation wavelength range, and the setting unit may set the exposure time for each piece of fluorescence macro image data corresponding to each excitation wavelength range. The appropriate exposure time varies depending on the excitation wavelength range, but the exposure time can be set with higher accuracy by setting the exposure time for each piece of fluorescence macro image data corresponding to each excitation wavelength range.

The excitation light emission unit may emit excitation light for each excitation wavelength range, the image sensor may be a color image sensor, the color image sensor may output fluorescence macro image data corresponding to each excitation wavelength range, and the setting unit may perform tissue recognition for detecting a region of tissue included in a specimen for each piece of fluorescence macro image data corresponding to each excitation wavelength range. Tissue recognition is performed based on clear fluorescence macro image data that does not include excitation light, whereby a region of tissue included in a specimen can be detected with high accuracy.

The excitation light emission unit may emit excitation light for each excitation wavelength range, the image sensor may be a color image sensor, the color image sensor may output fluorescence macro image data corresponding to each excitation wavelength range, and the setting unit may set a focus measurement position for each piece of fluorescence macro image data corresponding to each excitation wavelength range. By setting the focus measurement position based on the clear fluorescence macro image data that does not include excitation light, the focus position can be set with high accuracy according to the arrangement of the tissue.

The image acquisition apparatus may further include a bright-field illumination unit that performs bright-field illumination on the specimen. According to such a configuration, bright-field macro image data can be acquired in addition to the above-described fluorescence macro image data.

The image acquisition apparatus may further include a dark-field illumination unit that performs dark field illumination on the specimen. According to such a configuration, dark-field macro image data can be acquired in addition to the above-described fluorescence macro image data.

The image acquisition apparatus may further include a switching unit configured to be able to take in and out the fluorescence filter unit with respect to the optical axis of the fluorescence directed to the imaging lens. According to such a configuration, for example, the fluorescence filter unit is provided on the optical axis of fluorescence only when the fluorescence macro image data is acquired, and in other cases (for example, when the bright-field macro image data is acquired or when the dark-field macro image data is acquired), the fluorescence filter unit can be retracted from the optical axis of fluorescence, and each image data can be appropriately acquired.

### Advantageous Effects of Invention

According to the present disclosure, the micro image acquisition condition can be set more appropriately.

### Brief Description of Drawings

FIG. 1 is a diagram schematically illustrating an image acquisition apparatus according to the present embodiment.
FIG. 2 is a view illustrating a bright-field macro image, a dark-field macro image, and a fluorescence macro image of a sample.
FIG. 3 is a view illustrating a fluorescence macro image after preprocessing.
FIG. 4 is a diagram for explaining switching of macro image display.
FIG. 5 is a diagram illustrating a display image at the time of tissue recognition.
FIG. 6 is a view illustrating a display image of a fluorescence macro image and a focus measurement point of multi-color excitation.
FIG. 7 is a diagram for explaining a setting process of a focus measurement position.
FIG. 8 is a view illustrating a display image of a fluorescence macro image and checkpoints in a certain excitation wavelength range.
FIG. 9 is a diagram for explaining an exposure time setting process.
FIG. 10 is a diagram for explaining switching of fluorescence macro image display.
FIG. 11 is a flowchart illustrating macro image capturing processing.
FIG. 12 is a flowchart illustrating tissue recognition processing.
FIG. 13 is a flowchart illustrating a setting process of a focus measurement position.
FIG. 14 is a flowchart illustrating an exposure time setting process.

### Description of Embodiments

Hereinafter, embodiments of the present disclosure will be described in detail with reference to the drawings. The same or corresponding parts in the respective drawings are denoted with the same reference signs, and repetitive descriptions will be omitted.

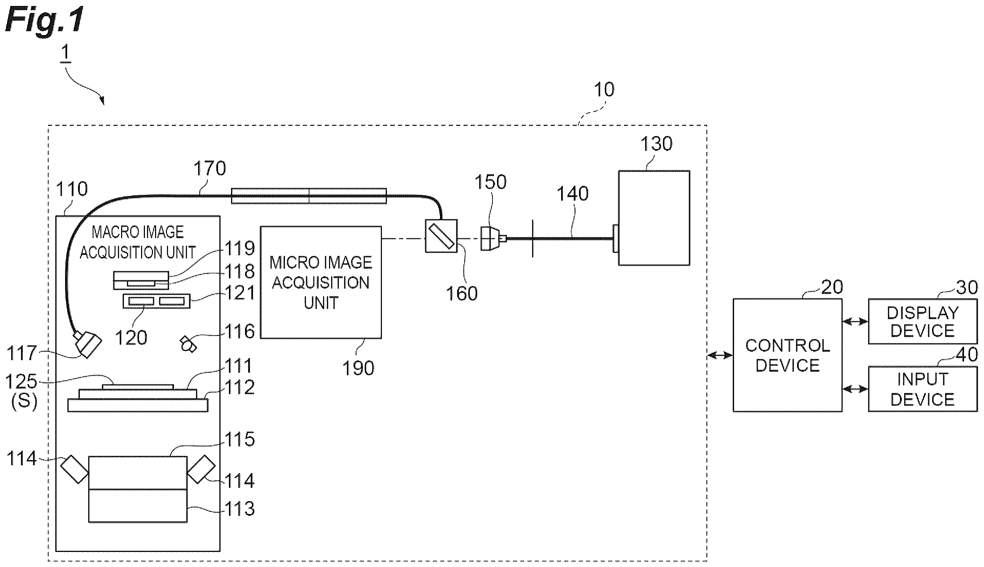

FIG. 1 is a diagram schematically illustrating an image acquisition apparatus 1 according to the present embodiment. The image acquisition apparatus 1 emits light to a slide glass 125 on which a sample S (specimen) is placed to perform scanning, and acquires an image of the sample S. In particular, the image acquisition apparatus 1 is an apparatus that acquires a macro image of the sample S (details will be described later). As the sample S to be subjected to image acquisition, for example, a biological sample such as a tissue section stained with a fluorescent dye is used. The slide glass 125 may be a slide that seals the sample S. The image acquisition apparatus 1 includes a microscope apparatus 10, a control apparatus 20 (setting unit) that performs control such as image acquisition by the microscope apparatus 10, a display apparatus 30, and an input apparatus 40.

The microscope apparatus 10 includes a macro image acquisition unit 110, an excitation light source 130, a first light guide fiber 140, a first emission unit 150, a fluorescent macro mirror 160, a second light guide fiber 170, and a micro image acquisition unit 190.

The macro image acquisition unit 110 acquires a fluorescence macro image (fluorescence macro image data), a bright-field macro image (bright-field macro image data), and a dark-field macro image (dark-field macro image data) of the sample S. The macro image is a low magnification image (image having a lower magnification than the micro image and including the entire sample S) of the sample S. The macro image acquisition unit 110 acquires a low-resolution macro image corresponding to the entire image of the sample S. The macro image is an image for setting an imaging condition for the sample S, specifically, an acquisition condition of a micro image. The micro image is a high magnification image (an image having a higher magnification than the macro image, for example, an image obtained using a lens having a higher magnification such as 4 times, 10 times, 20 times, or 40 times) of the sample S.

The fluorescence macro image is a macro image of the sample S obtained by imaging fluorescence generated by having the sample S irradiated with excitation light. The bright-field macro image is a macro image of the sample S acquired using transmitted illumination. The dark-field macro image is a macro image of the sample S observed by illuminating the sample S in a dark field using scattered light generated by emitting oblique illumination or the like without directly using transmitted illumination.

The macro image acquisition unit 110 includes a sample holder 111, a scan stage 112, a bright-field light source 113 (bright-field illumination unit), a dark-field light source 114 (dark-field illumination unit), a dark-field macro imaging shutter 115, a barcode imaging light source 116, a second emission unit 117 (excitation light emission unit), an imaging lens 118, a color image sensor (image sensor) 119, a fluorescence filter unit 120, and a switching unit 121. The imaging lens 118, the color image sensor 119, the fluorescence filter unit 120, and the switching unit 121 constitute a macro observation camera that captures a macro image.

The sample holder 111 is a holder on which the conveyed slide glass 125 is placed. As described above, the sample S is placed on the slide glass 125. The scan stage 112 is an XY stage that moves the sample holder 111 in the XY directions (front-back and left-right directions), and conveys the sample holder 111 to the macro image acquisition position after the sample holder 111 has placed the slide glass 125. In addition, the scan stage 112 may convey the sample holder 111 to the micro image acquisition position by the micro image acquisition unit 190. In this case, the scan stage 112 may be a macro-micro switching stage capable of conveying the sample holder 111 to each of the macro image acquisition position and the micro image acquisition position.

The bright-field light source 113 is a bright-field illumination means used when acquiring a bright-field macro image which is a macro image of the sample S. The bright-field light source 113 has an optical axis parallel to the optical axis of the imaging lens 118 of the macro observation camera. For example, the bright-field light source 113 is a white light source (for example, a white LED), and is provided immediately below the slide glass 125 held by the sample holder 111. That is, the bright-field light source 113 is provided in a direction orthogonal to the placement surface of the slide glass 125 in the sample holder 111 and on the opposite side of the second emission unit 180 and the color image sensor 119 with respect to the sample S. The bright-field light source 113 performs bright-field illumination on the sample S from directly below via, for example, a diffusion plate (not illustrated).

The dark-field light source 114 is a dark-field illumination means (oblique illumination means) used when acquiring a dark-field macro image which is a macro image of the sample S. The dark-field light source 114 has an optical axis inclined with respect to the optical axis of the imaging lens 118 of the macro observation camera. For example, the dark-field light source 114 is a white light source (for example, a white LED), and is provided obliquely below the slide glass 125 held by the sample holder 111. That is, the dark-field light source 114 is provided in a direction orthogonal to the placement surface of the slide glass 125 in the sample holder 111 and on the opposite side of the second emission unit 180 and the color image sensor 119 with respect to the sample S. The dark-field light source 114 performs dark-field illumination on the sample S from obliquely below. The dark-field macro imaging shutter 115 shields a diffusion plate (not illustrated) of the bright-field light source 113 at the time of imaging the dark-field macro image. As a result, dark-field illumination can be appropriately performed even in a configuration in which the bright-field light source 113 and the dark-field light source 114 coexist.

The barcode imaging light source 116 is a light source that emits light to read a barcode attached to the slide glass 125 at the time of bright-field macro image acquisition and the like. By reading the barcode, the slide glass 125 (that is, the sample S) can be uniquely specified. That is, the control apparatus 20 to be described later may uniquely specify the slide glass 125 (that is, the sample S) from the information of the barcode.

The second emission unit 117 is a fluorescence macro excitation light emission unit used when acquiring a fluorescence macro image which is a macro image of the sample S. The second emission unit 117 emits the excitation light output from the excitation light source 130 onto the sample S from obliquely above. The excitation light herein is light having at least 1 excitation wavelength range among a plurality of excitation wavelength ranges. As described above, when the excitation light is emitted from obliquely above the sample S, in the configuration in which the macro observation camera (fluorescence filter unit 120, imaging lens 118, and color image sensor 119) is provided immediately above the sample S, the fluorescence from the sample S can be appropriately imaged without interference between the configuration in which the excitation light is emitted and the macro observation camera.

The excitation light source 130, the first light guide fiber 140, the first emission unit 150, the fluorescent macro mirror 160, and the second light guide fiber 170, which are configurations related to the excitation light emitted from the second emission unit 117, will be described.

The excitation light source 130 is a light source (for example, an LED) that generates and outputs excitation light related to acquisition of a fluorescence macro image in the macro image acquisition unit 110 and excitation light related to acquisition of a fluorescence micro image in the micro image acquisition unit 190. As described above, in the image acquisition apparatus 1, the same excitation light source 130 is used as a light source related to acquisition of the fluorescence macro image and the fluorescence micro image. In the present embodiment, it is described that the same excitation light source 130 is used as the light source related to the acquisition of the fluorescence macro image and the fluorescence micro image, but the present invention is not limited thereto, and different light sources may be used as the light sources related to the acquisition of the fluorescence macro image and the fluorescence micro image.

The excitation light source 130 is configured to be able to emit excitation light in a plurality of excitation wavelength ranges. The excitation light source 130 can emit the excitation light while switching the excitation wavelength range of the excitation light. The plurality of excitation wavelength ranges corresponds to reflection wavelength ranges of fluorescence filter unit 120 that is, for example, a multiband pass filter (details will be described later).

The first light guide fiber 140 is an optical fiber that guides the excitation light output from the excitation light source 130 to the first emission unit 150. The first emission unit 150 emits the excitation light guided from the excitation light source 130 through the first light guide fiber 140 onto the fluorescent macro mirror 160. The fluorescent macro mirror 160 is disposed on an optical path of the excitation light emitted from the first emission unit 150, reflects the excitation light, and guides the excitation light to the second light guide fiber 170. At the time of fluorescence micro image acquisition, the fluorescent macro mirror 160 guides the excitation light toward the micro image acquisition unit 190 by changing the angle of the mirror. The second light guide fiber 170 guides the excitation light input via the fluorescent macro mirror 160 to the second emission unit 117 of the macro image acquisition unit 110.

The fluorescence filter unit 120 is provided in a region immediately above the sample S and between the sample S and the color image sensor 119, and has a plurality of reflection wavelength ranges corresponding to a plurality of excitation wavelength ranges and a transmission wavelength range between the respective reflection wavelength ranges. According to such a fluorescence filter unit 120, since the light in the excitation wavelength range is reflected, imaging of the light in the excitation wavelength range by the color image sensor 119 is suppressed.

The fluorescence filter unit 120 may be, for example, a filter used in a Pinkel arrangement including a multiband pass filter. In the configuration in which the multiband pass filter is used, it is not necessary to switch the filter according to the switching of the excitation wavelength range, and 1 scan may be enough for the stage operation.

The switching unit 121 is a filter wheel that holds one or a plurality of multiband pass filters of the fluorescence filter unit 120, and is configured to switch between a state in which the multiband pass filter is arranged on the optical axis of fluorescence and a state in which the multiband pass filter is not arranged on the optical axis of fluorescence (a state without a filter) by being rotated. That is, the switching unit 121 is a member configured such that the fluorescence filter unit 120 can be taken in and out with respect to the optical axis of fluorescence toward the imaging lens 118. For example, the switching unit 121 may provide the fluorescence filter unit 120 on the optical axis of fluorescence only when the fluorescence macro image is acquired, and may retract the fluorescence filter unit 120 from the optical path of fluorescence in other cases (for example, when the bright-field macro image or the dark-field macro image is acquired). At the time of acquisition of the bright-field macro image or the dark-field macro image, the switching unit 121 may switch to a multiband pass filter different from that at the time of acquisition of the fluorescence macro image. Note that the switching unit 121 is not limited to the filter wheel, and may be a slide mechanism in which one or a plurality of multiband filters of the fluorescence filter unit 120 is slid and arranged on the optical axis. In addition, since the bright-field macro image and the dark-field macro image can be acquired even in a state where the multiband pass filter is arranged on the optical axis, the switching unit 121 is not necessarily provided.

Note that the fluorescence filter unit 120 may be, for example, a filter used in a Sedat arrangement including a plurality of switchable single-band filters. In this case, the switching unit 121 may switch the single-band filters according to each excitation wavelength. In such a configuration, the scan operation is performed for each excitation wavelength range.

The imaging lens 118 is a lens that images the light transmitted through the fluorescence filter unit 120, that is, the fluorescence from the sample S corresponding to the emitted excitation light. The imaging lens 118 forms an image of the entire slide glass 125 on the color image sensor 119.

The color image sensor 119 is an image sensor that captures an optical image formed by the imaging lens 118 and outputs a fluorescence macro image of the sample S. The color image sensor 119 captures an image of the entire slide glass 125 formed by the imaging lens 118. Note that, although the color image sensor 119 is used in the present embodiment, a monochrome image sensor that is an image sensor may be used instead of the color image sensor 119.

The control apparatus 20 is a control means that performs control of an image acquisition operation in the microscope apparatus 10, setting of an image acquisition condition, processing of the acquired image data of the sample S, and the like. The control apparatus 20 includes, for example, a computer including a CPU and a storage apparatus such as a necessary memory and a hard disk. In addition, the display apparatus 30 and the input apparatus 40 are connected to the control apparatus 20. The display apparatus 30 is, for example, a display such as an LED display, an OLED display, or a liquid crystal display, and is used for displaying an operation screen necessary for the operation of the image acquisition apparatus 1, displaying an acquired image of the sample S, and the like. Furthermore, the input apparatus 40 is, for example, a keyboard or a mouse, and is used for input of information necessary for image acquisition, input of an instruction regarding an image acquisition operation, and the like.

At the time of macro image acquisition, the control apparatus 20 controls the scan stage 112 so that the sample S is conveyed to the macro image acquisition position. In a case of acquiring the fluorescence macro image, the control apparatus 20 controls the excitation light source 130 such that excitation light in a predetermined excitation wavelength range is emitted, and controls the switching unit 121 such that the multiband pass filter of the fluorescence filter unit 120 according to the excitation wavelength range is arranged. In a case of acquiring the bright-field macro image, the control apparatus 20 controls the bright-field light source 113 such that bright-field illumination is performed. In a case of acquiring the dark-field macro image, the control apparatus 20 controls the dark-field light source 114 such that the dark-field illumination is performed, and controls the dark-field macro imaging shutter 115 such that a diffusion plate (not illustrated) of the bright-field light source 113 is shielded. Further, at the time of micro image acquisition, the control apparatus 20 controls the scan stage 112 so that the sample S is conveyed to the micro image acquisition position. Then, the control apparatus 20 controls the micro image acquisition unit 190 so that a micro image is acquired under a set micro image acquisition condition to be described later.

The control apparatus 20 sets a micro image acquisition condition of the sample S based on the fluorescence macro image captured by the color image sensor 119. The acquisition condition of the micro image is, for example, the position of the focus measurement point (focus measurement position) and the exposure time at the time of acquiring the micro image. That is, the control apparatus 20 sets the position of the focus measurement point (setting of focus measurement position) and the exposure time at the time of acquiring the micro image based on the fluorescence macro image. In addition, the control apparatus 20 performs tissue recognition for detecting the region of the tissue included in the sample S based on the fluorescence macro image as a premise of performing the above-described position setting and exposure time setting of the focus measurement point. The control apparatus 20 sets the micro scan region at the time of acquiring the micro image based on the region of the tissue included in the sample S detected by the tissue recognition. The focus measurement point may be set to, for example, a point (checkpoint) having higher luminance than other regions. Furthermore, for example, in a case where a filter used in the above-described Sedat arrangement is used as the fluorescence filter unit 120, the control apparatus 20 may perform tissue recognition for each fluorescence macro image of excitation light having different excitation wavelength ranges. Further, the control apparatus 20 may set the micro scan region for each fluorescence macro image of the excitation light having different excitation wavelength ranges.

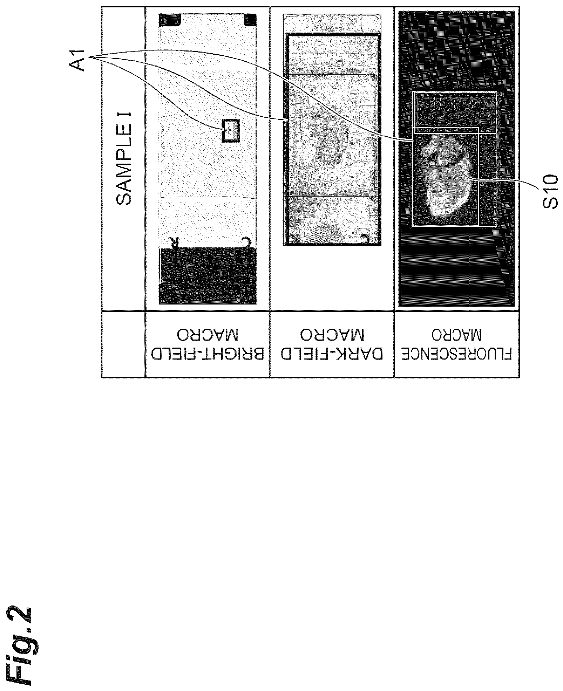

FIG. 2 is a view illustrating a bright-field macro image, a dark-field macro image, and a fluorescence macro image of the prepared sample S. Here, an image of the sample S of a sample I is illustrated as the image of the sample S. In FIG. 2, the tissue-recognized region is indicated by a square tissue recognition region A1. In addition, in FIG. 2, the plurality of set focus measurement points is indicated by cross marks. As is clear from FIG. 2, in the bright-field macro image and the dark-field macro image, the tissue recognition cannot be performed with high accuracy for the sample I. For example, in the bright-field macro image of the sample I, the tissue recognition region A1 is extremely small, and in the dark-field macro image of the sample I, the tissue recognition region A1 is larger than the actual tissue region. Since the tissue recognition is not appropriately performed, obviously, the focus measurement point cannot be appropriately set in the bright-field macro image and the dark-field macro image of the sample I. Specifically, the focus measurement point is set to air bubbles, dust, or the like other than tissue.

On the other hand, in the fluorescence macro image of the sample I, the tissue recognition region A1 substantially coincides with the actual region of a tissue S10, and the tissue recognition can be performed with high accuracy. As described above, the accuracy of tissue recognition can be improved by using the fluorescence macro image.

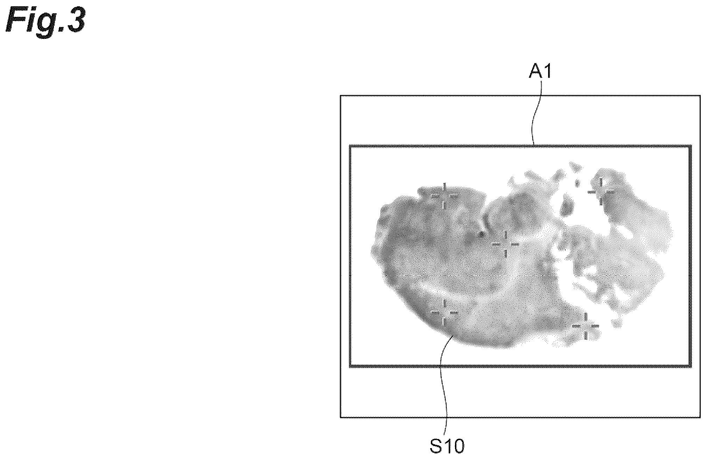

On the other hand, the focus measurement point is set to overlap the tissue S10 in the fluorescence macro image of the sample I, but is set in a region not overlapping the tissue S10 (inappropriate region) in the fluorescence macro image of the sample I. In this regard, for example, by performing tissue recognition and setting of the focus measurement point after performing preprocessing for negative-positive inversion on the fluorescence macro image, it is possible to further improve the tissue recognition accuracy and improve the accuracy of setting the focus measurement point as illustrated in FIG. 3. FIG. 3 illustrates the setting of the tissue recognition and the focus measurement point in the fluorescence macro image after the preprocessing of the sample I. In the example illustrated in FIG. 3, the tissue recognition region A1 coincides with the actual region of the tissue S10, and all the focus measurement points are set to overlap the tissue S10 in the fluorescence macro image.

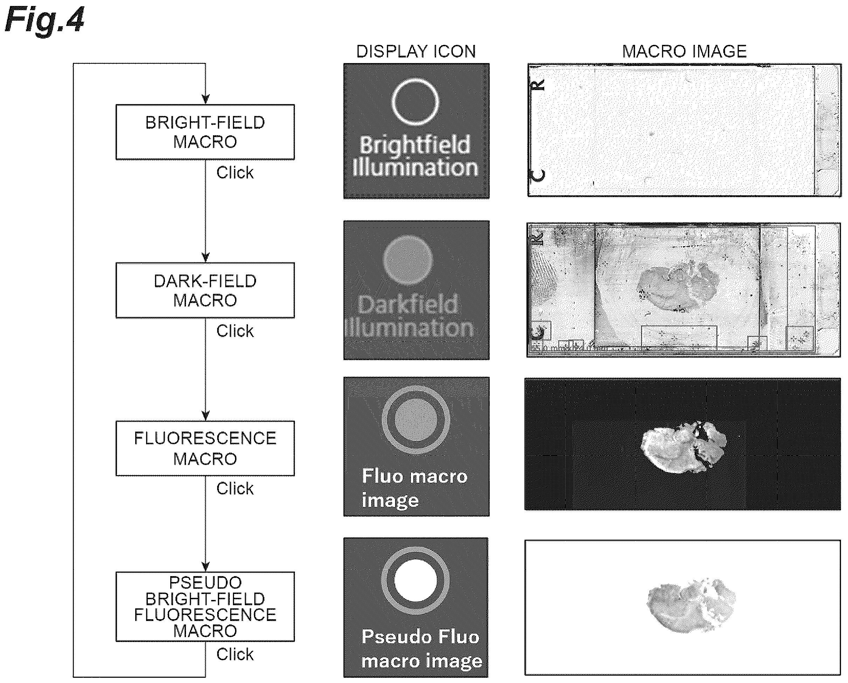

As described above, the control apparatus 20 may perform the tissue recognition and the position setting of the focus measurement point (setting of the focus measurement position) based on the fluorescence macro image subjected to the preprocessing of negative-positive inverting the captured fluorescence macro image (pseudo bright-field fluorescence macro image). Note that, as illustrated in FIG. 4, the control apparatus 20 may control the display apparatus 30 to switch and display the bright-field macro image, the dark-field macro image, the fluorescence macro image, and the preprocessed fluorescence macro image (pseudo bright-field fluorescence macro image) for the same sample S. In this case, as illustrated in FIG. 4, a display icon of each image may be displayed on the display apparatus 30, and the displayed macro image may be switched by clicking the display icon.

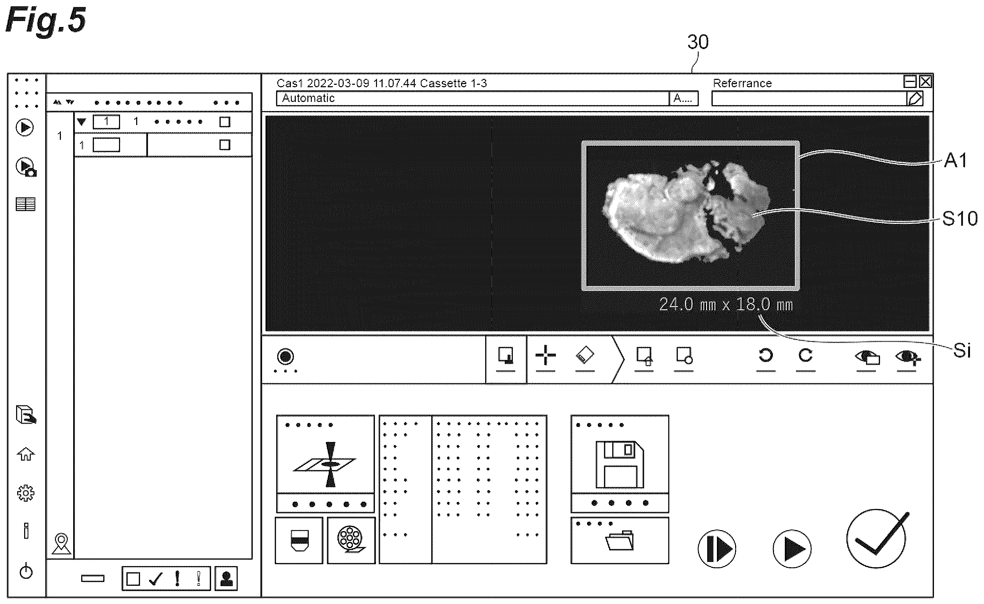

Hereinafter, processing of the control apparatus 20 and display on the display apparatus 30 when the tissue recognition, the position setting of the focus measurement point, and the exposure time setting are sequentially performed will be described with reference to FIGS. 5 to 10. FIG. 5 is a diagram illustrating a display image on the display apparatus 30 at the time of tissue recognition. As illustrated in FIG. 5, the control apparatus 20 controls the display apparatus 30 so that the tissue S10 of the sample S on which the tissue recognition has been performed, the tissue recognition region A1, and an estimated size Si of the tissue S10 of the sample S are displayed together.

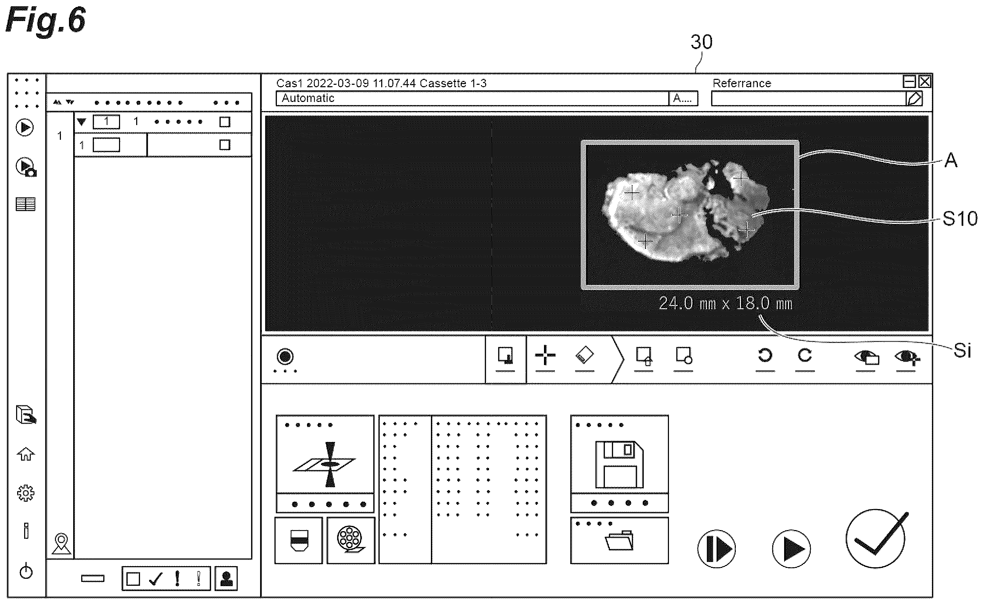

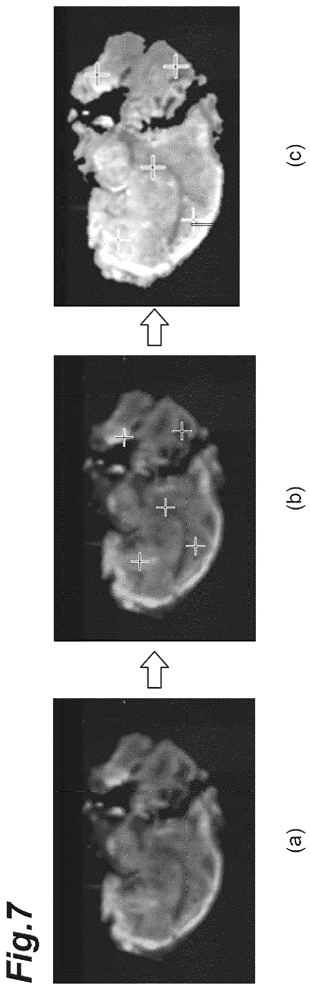

Subsequently, the control apparatus 20 sets the focus condition for the sample S on which the tissue recognition has been performed, and controls the display apparatus 30 such that, for example, an image in which 5 focus measurement points are superimposed on the tissue S10 of the sample S is displayed as illustrated in FIG. 6. FIG. 6 is a view illustrating a display image of the fluorescence macro image and the focus measurement point of multi-color excitation. The fluorescence macro image of multi-color excitation is a fluorescence macro image detected in a state where the sample S is irradiated with excitation light in all excitation wavelength ranges. FIG. 7 is a diagram for explaining a process of the focus condition setting. For example, it is assumed that excitation light in a certain excitation wavelength range (for example, Violet (wavelength range of 360 nm or more and 400 nm or less)) is emitted, and the fluorescence filter unit 120 corresponding to the excitation light is set, whereby the fluorescence macro image illustrated in FIG. 7(a) is acquired. Then, as illustrated in FIG. 7(b), the control apparatus 20 extracts a predetermined number (for example, 5) of checkpoints having higher luminance than other regions for the fluorescence macro image, and sets each of the extracted 5 check points as a focus measurement point. Then, as illustrated in FIG. 7(c), the control apparatus 20 controls the display apparatus 30 so that the set focus measurement points are superimposed and displayed on the fluorescence macro image with all-color excitation. As described above, the control apparatus 20 may extract the focus measurement points from the fluorescence macro image detected according to the excitation light in a certain excitation wavelength range (for example, Violet), and control the display apparatus 30 such that the extracted focus measurement points are superimposed and displayed on the fluorescence macro image of multi-color excitation. For example, in a case where the filter used in the above-described Pinkel arrangement is used as the fluorescence filter unit 120, the control apparatus 20 may set the focus measurement point only from the fluorescence macro image corresponding to the excitation light of the single excitation wavelength range as described above. Furthermore, for example, in a case where the filter used in the above-described Sedat arrangement is used as the fluorescence filter unit 120, the control apparatus 20 may set the focus measurement point for each fluorescence macro image of excitation light having different excitation wavelength ranges.

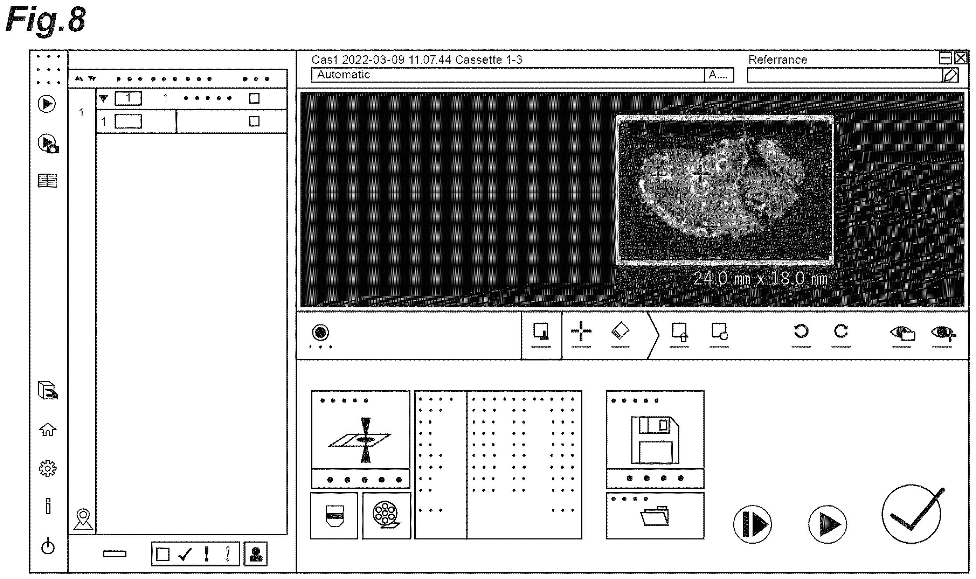

Subsequently, the control apparatus 20 sets the exposure time for each fluorescence macro image according to the excitation wavelength range. That is, the control apparatus 20 controls the excitation light source 130 so that excitation light is sequentially emitted for each excitation wavelength range, and the color image sensor 119 outputs a fluorescence macro image corresponding to each excitation wavelength range. The control apparatus 20 extracts a predetermined number (for example, 3) of checkpoints having higher luminance than other regions in the fluorescence macro image, and controls the display apparatus 30 such that an image in which 3 confirmation points each indicated by a cross are superimposed on the tissue S10 of the sample S is displayed, for example, as illustrated in FIG. 8. FIG. 8 is a view illustrating a display image of a fluorescence macro image and checkpoints in a certain excitation wavelength range.

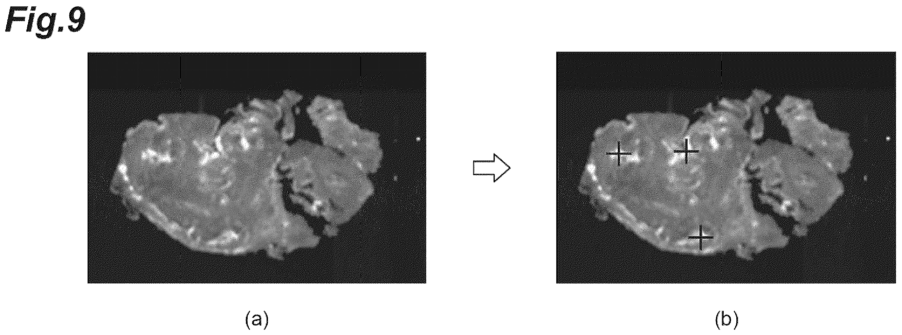

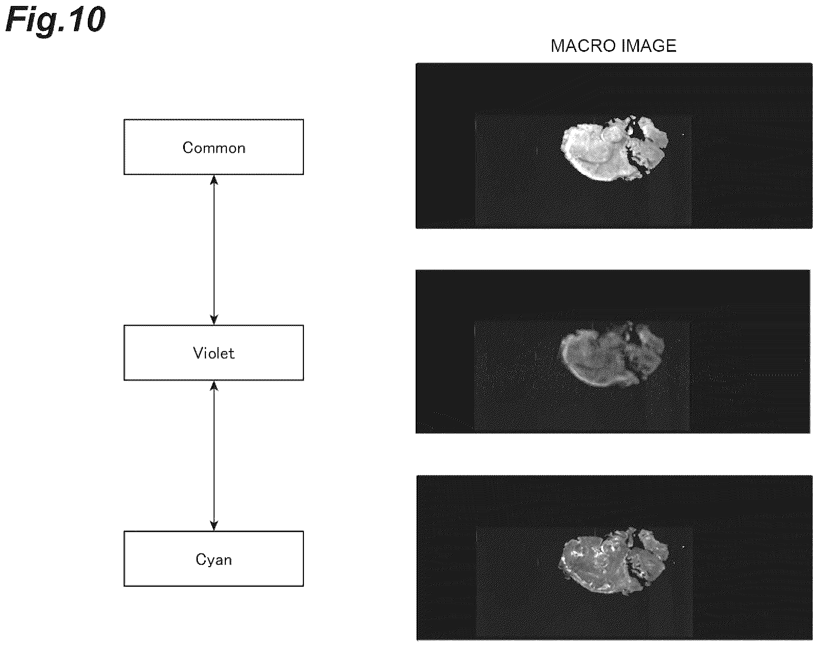

FIG. 9 is a diagram for explaining an exposure time setting process. As described above, regarding the fluorescence macro image corresponding to the excitation light in a certain excitation wavelength range (for example, Cyan (wavelength range of 460 nm or more and 490 nm or less)) (see FIG. 9(a)), the control apparatus 20 extracts 3 points having higher intensity (luminance) than other regions and independent positions as checkpoints in descending order (see FIG. 9(b)). Then, the control apparatus 20 sets the exposure time based on the extracted luminance of the plurality of (3) checkpoints. Since the position of the maximum luminance is grasped, the exposure time can be set with high accuracy. As described above, the control apparatus 20 performs such an exposure time setting process for each fluorescence macro image according to the excitation wavelength range. As illustrated in FIG. 10, the control apparatus 20 may control the display apparatus 30 so that the fluorescence macro image display can be appropriately switched by switching the excitation wavelength range of the excitation light. In the example illustrated in FIG. 10, a fluorescence macro image of multi-color excitation (Common (for example, a wavelength range obtained by combining a plurality of different monochromatic lights)), a fluorescence macro image of Violet, and a fluorescence macro image of Cyan are switched.

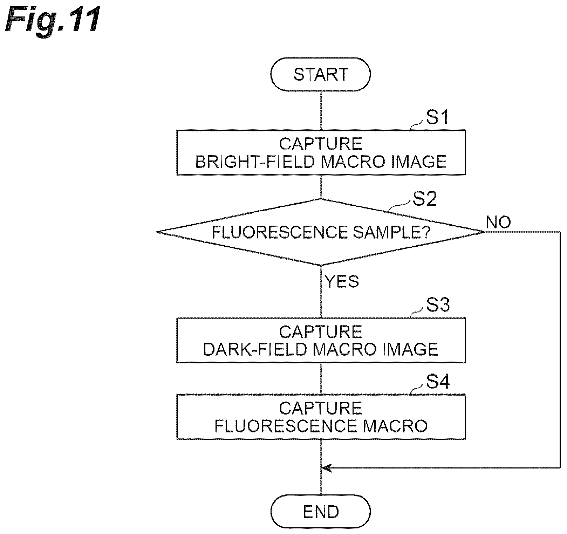

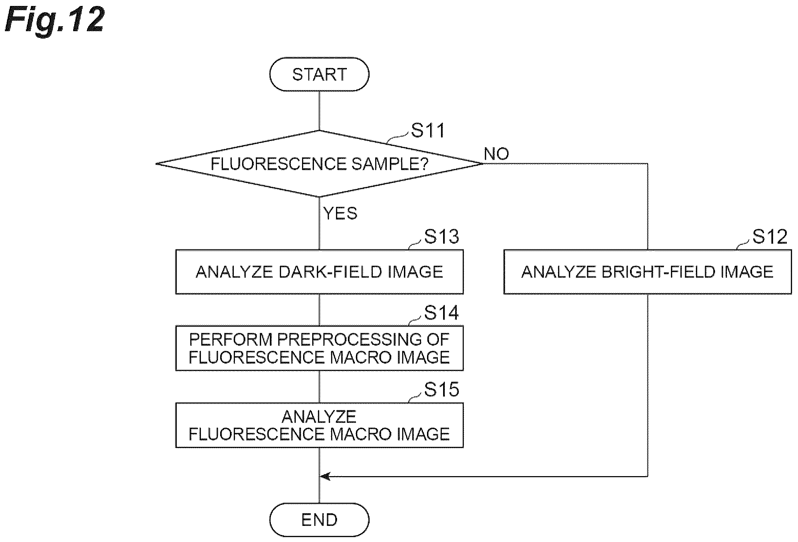

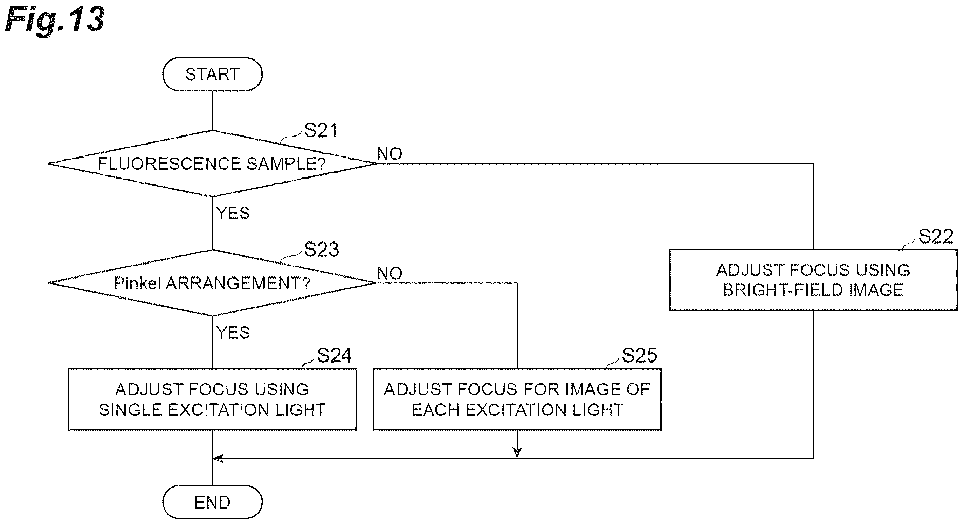

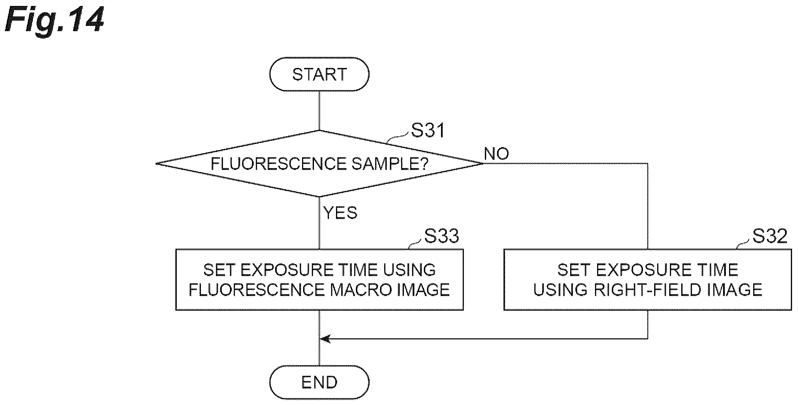

Next, processing executed by the image acquisition apparatus 1 will be described with reference to FIGS. 11 to 14. FIG. 11 is a flowchart illustrating macro image capturing processing. FIG. 12 is a flowchart illustrating tissue recognition processing. FIG. 13 is a flowchart illustrating a setting process of a focus measurement position. FIG. 14 is a flowchart illustrating an exposure time setting process. These processes are, for example, processes related to setting of micro image acquisition conditions.

The macro image capturing processing will be described. As illustrated in FIG. 11, first, a bright-field macro image is captured (step S1). Specifically, the control apparatus 20 controls the scan stage 112 such that the sample S is conveyed to the macro image acquisition position, and controls the bright-field light source 113 such that bright-field illumination is performed. As a result, a bright-field macro image is captured by the color image sensor 119.

Subsequently, it is determined whether or not the sample S is a fluorescence sample (step S2), and in a case where the sample S is not a fluorescence sample, the processing ends. On the other hand, in a case where the sample S is a fluorescence sample, a dark-field macro image is captured (step S3). Specifically, the dark-field light source 114 controls the control apparatus 20 such that the dark-field illumination is performed, and controls the dark-field macro imaging shutter 115 such that a diffusion plate (not illustrated) of the bright-field light source 113 is shielded. As a result, a dark-field macro image is captured by the color image sensor 119.

Subsequently, a fluorescence macro image is captured (step S4). Specifically, the excitation light source 130 is controlled by the control apparatus 20 so as to emit excitation light in a predetermined excitation wavelength range (excitation light emission step), and the switching unit 121 is controlled so that the multiband pass filter of the fluorescence filter unit 120 according to the excitation wavelength range is arranged. As a result, a fluorescence macro image is captured by the color image sensor 119.

The tissue recognition processing (setting step) will be described. As shown in FIG. 12, first, it is determined whether or not the sample S is a fluorescence sample (step S11), and in a case where the sample S is not a fluorescence sample, a bright-field macro image is analyzed (step S12). Specifically, the control apparatus 20 performs the tissue recognition based on the bright-field macro image. On the other hand, in a case where the sample S is a fluorescence sample, first, a dark-field macro image is analyzed (step S13). Specifically, the control apparatus 20 performs tissue recognition based on the dark-field macro image.

Subsequently, preprocessing of the fluorescence macro image is performed (step S14). Specifically, the control apparatus 20 performs inverting processing of negative-positive inversion of the fluorescence macro image. This improves the accuracy of tissue recognition. Finally, the fluorescence macro image after the inversion processing is analyzed (step S15). Specifically, the control apparatus 20 performs tissue recognition based on the fluorescence macro image after the inversion processing.

A focus measurement position setting process (setting step) will be described. As shown in FIG. 13, first, it is determined whether or not the sample S is a fluorescence sample (step S21), and in a case where the sample S is not a fluorescence sample, a focus measurement position is set using a bright-field macro image (step S22).

On the other hand, in a case where the sample S is a fluorescence sample, first, it is determined whether or not a filter used in the Pinkel arrangement is used as the fluorescence filter unit 120 (step S23). In a case where the filter used in the Pinkel arrangement is used, the focus measurement position is set using the fluorescence macro image corresponding to the excitation light in the single excitation wavelength range (step S24). Specifically, the control apparatus 20 extracts, for example, 5 checkpoints having higher luminance than other regions for the fluorescence macro image corresponding to the excitation light in a certain excitation wavelength range (for example, Violet), and sets each of the extracted 5 checkpoints as a focus measurement point. On the other hand, in a case where the filter used in the Sedat arrangement instead of the Pinkel arrangement is used, the focus measurement point is set for each fluorescence macro image of the excitation light having different excitation wavelength ranges (step S25).

The exposure time setting process will be described. As shown in FIG. 14, first, it is determined whether or not the sample S is a fluorescence sample (step S31), and in a case where the sample S is not a fluorescence sample, the exposure time is set using a bright-field macro image (step S32).

On the other hand, in a case where the sample S is a fluorescence sample, first, the exposure time is set using the fluorescence macro image (step S33). Specifically, the control apparatus 20 sets the exposure time for each fluorescence macro image according to the excitation wavelength range. The control apparatus 20 extracts, for example, 3 checkpoints having higher luminance than other regions in the fluorescence macro image, and sets an initial value of the exposure time based on the checkpoints.

Next, functional effects of the image acquisition apparatus 1 according to the present embodiment will be described.

The image acquisition apparatus 1 according to the present disclosure is an image acquisition apparatus to acquire a macro image of the sample S, the image acquisition apparatus including: the second emission unit 117 configured to obliquely emit excitation light in at least 1 excitation wavelength range among a plurality of excitation wavelength ranges onto the sample S; a macro observation camera including a fluorescence filter unit 120 having a plurality of reflection wavelength ranges corresponding to the plurality of excitation wavelength ranges and a transmission wavelength range between the reflection wavelength ranges, an imaging lens 118 configured to form an image of fluorescence from the sample S corresponding to the emitted excitation light, and a color image sensor 119 configured to capture an optical image formed by the imaging lens 118 and output a fluorescence macro image of the sample S; and a control apparatus 20 configured to set an acquisition condition of a micro image of the sample S based on the fluorescence macro image.

In the image acquisition apparatus 1, the sample S is obliquely irradiated with the excitation light, and the optical image of the fluorescence from the sample S through the fluorescence filter unit 120 that reflects the light in the excitation wavelength range and the imaging lens 118 is imaged by the color image sensor 119, and the fluorescence macro image of the sample S is output. As described above, by having the sample S irradiated with the excitation light obliquely, in the configuration in which the macro observation camera is provided immediately above the sample S, the fluorescence from the sample S is appropriately imaged by the color image sensor 119. In addition, since the light in the excitation wavelength range is reflected by the fluorescence filter unit 120 in the preceding stage of the color image sensor 119, only the fluorescence not including the excitation light is appropriately imaged by the color image sensor 119. By outputting the fluorescence macro image captured in this manner and setting the acquisition condition of the micro image of the sample S, the acquisition condition of the micro image can be appropriately set. That is, since only the fluorescence is imaged by the color image sensor 119 through the fluorescence filter unit 120, the tissue in the sample S is clearly detected based on the fluorescence macro image, the region detection of the tissue, the setting of the focus measurement position, and the like are appropriately performed, and the acquisition condition of the micro image can be appropriately set.

The control apparatus 20 may set the exposure time at the time of acquiring the micro image based on the fluorescence macro image. As described above, since the tissue of the sample S is clearly detected from the macro image output from the macro observation camera, it is possible to set the appropriate exposure time at the time of acquiring the micro image with high accuracy based on the macro image data.

The control apparatus 20 may extract a predetermined number of checkpoints having higher luminance than other regions in the fluorescence macro image, and set the exposure time based on the luminance of the plurality of extracted checkpoints. As described above, the exposure time is set in consideration of the luminance of the checkpoints, whereby the exposure time can be set with higher accuracy.

The control apparatus 20 may set the exposure time for each fluorescence macro image corresponding to each excitation wavelength range. The appropriate exposure time varies depending on the excitation wavelength range, but the exposure time can be set with higher accuracy by setting the exposure time for each fluorescence macro image corresponding to each excitation wavelength range.

The control apparatus 20 may perform tissue recognition for detecting a tissue region included in the sample S or setting of a micro scan region based on the fluorescence macro image. Further, the control apparatus 20 may perform tissue recognition for detecting a tissue region included in the sample S or setting of a micro scan region for each fluorescence macro image corresponding to each excitation wavelength range. The tissue recognition is performed based on clear fluorescence macro image that does not include excitation light, whereby a region of tissue included in the sample S can be detected with high accuracy.

The control apparatus 20 may set the focus measurement position based on the fluorescence macro image. Further, the control apparatus 20 may set the focus measurement position for each fluorescence macro image corresponding to each excitation wavelength range. By setting the focus measurement position based on the clear fluorescence macro image that does not include excitation light, the focus measurement position can be set with high accuracy according to the arrangement of the tissue.

The image acquisition apparatus 1 may further include the bright-field light source 113 that performs bright-field illumination on the sample S. According to such a configuration, a bright-field macro image can be acquired in addition to the above-described fluorescence macro image.

The image acquisition apparatus 1 may further include the dark-field light source 114 that performs dark-field illumination on the sample S. According to such a configuration, a dark-field macro image can be acquired in addition to the above-described fluorescence macro image.

The image acquisition apparatus 1 may further include the switching unit 121 configured to be able to take in and out the fluorescence filter unit 120 with respect to the optical axis of the fluorescence directed to the imaging lens 118. According to such a configuration, for example, the fluorescence filter unit 120 is provided on the optical axis of fluorescence only when the fluorescence macro image is acquired, and in other cases (for example, when the bright-field macro image is acquired or when the dark-field macro image is acquired), the fluorescence filter unit 120 can be retracted from the optical axis of fluorescence, and each image data can be appropriately acquired.

Finally, various exemplary embodiments included in the present disclosure are described in the following [E1] to [E9] and [E10] to [E16].

### [E1]

An image acquisition apparatus to acquire a macro image of a specimen, the image acquisition apparatus including:
an excitation light emission unit configured to emit obliquely excitation light in at least 1 excitation wavelength range among a plurality of excitation wavelength ranges onto the specimen;
a macro observation camera including a fluorescence filter unit having a plurality of reflection wavelength ranges corresponding to the plurality of excitation wavelength ranges and a transmission wavelength range between the reflection wavelength ranges, an imaging lens configured to form an image of fluorescence from the specimen corresponding to the emitted excitation light, and an image sensor configured to capture an optical image formed by the imaging lens and output fluorescence macro image data of the specimen; and
a setting unit configured to set an acquisition condition of a micro image of the specimen, based on the fluorescence macro image data.

### [E2]

The image acquisition apparatus according to [E1], in which the setting unit sets exposure time at a time of acquiring the micro image, based on the fluorescence macro image data.

### [E3]

The image acquisition apparatus according to [E2], in which the setting unit extracts a predetermined number of checkpoints having higher luminance than other regions in the fluorescence macro image data, and set the exposure time based on the luminance of the plurality of extracted checkpoints.

### [E4]

The image acquisition apparatus according to [E2] or [E3], in which the excitation light emission unit emits the excitation light for each of the excitation wavelength ranges,
the image sensor is a color image sensor, the color image sensor outputting the fluorescence macro image data corresponding to each of the excitation wavelength ranges, and
the setting unit sets the exposure time for each piece of the fluorescence macro image data corresponding to each of the excitation wavelength ranges.

### [E5]

The image acquisition apparatus according to any one of [E1] to [E4], in which the excitation light emission unit emits the excitation light for each of the excitation wavelength ranges,
the image sensor is a color image sensor, the color image sensor outputting the fluorescence macro image data corresponding to each of the excitation wavelength ranges, and
the setting unit performs tissue recognition for detecting a region of tissue included in the specimen for each piece of the fluorescence macro image data corresponding to each of the excitation wavelength ranges.

### [E6]

The image acquisition apparatus according to any one of [E1] to [E5], in which the excitation light emission unit emits the excitation light for each of the excitation wavelength ranges,
the image sensor is a color image sensor, the color image sensor outputting the fluorescence macro image data corresponding to each of the excitation wavelength ranges, and
the setting unit sets a focus measurement position at the time of acquiring a micro image for each piece of the fluorescence macro image data corresponding to each of the excitation wavelength ranges.

### [E7]

The image acquisition apparatus according to any one of [E1] to [E6], further including a bright-field illumination unit configured to perform bright-field illumination on the specimen.

### [E8]

The image acquisition apparatus according to any one of [E1] to [E7], further including a dark-field illumination unit configured to perform dark-field illumination on the specimen.

### [E9]

The image acquisition apparatus according to any one of [E1] to [E8], further including a switching unit configured to be able to take in and out the fluorescence filter unit with respect to an optical axis of the fluorescence directed to the imaging lens.

### [E10]

An image acquisition method to acquire a macro image of a specimen, the method including:
an excitation light emission step of obliquely emitting excitation light in at least 1 excitation wavelength range among a plurality of excitation wavelength ranges onto the specimen;
an imaging step of imaging, using an image sensor, fluorescence generated from the specimen in response to the emitted excitation light and transmitted through a fluorescence filter unit having a plurality of reflection wavelength ranges corresponding to the plurality of excitation wavelength ranges and a transmission wavelength range between the reflection wavelength ranges, and outputting fluorescence macro image data of the specimen; and
a setting step of setting an acquisition condition of a micro image of the specimen, based on the fluorescence macro image data.

### [E11]

The image acquisition method according to [E10], in which in the setting step, exposure time at a time of acquiring the micro image is set based on the fluorescence macro image data.

### [E12]

The image acquisition method according to [E11], in which in the setting step, a predetermined number of checkpoints having higher luminance than other regions in the fluorescence macro image data is extracted, and the exposure time is set based on the luminance of the plurality of extracted checkpoints.

### [E13]

The image acquisition method according to [E11] or [E12], in which in the excitation light emission unit step, the excitation light is emitted for each of the excitation wavelength ranges,
in the imaging step, the fluorescence macro image data corresponding to each of the excitation wavelength ranges is output, and
in the setting step, the exposure time is set for each piece of the fluorescence macro image data corresponding to each of the excitation wavelength ranges.

### [E14]

The image acquisition method according to any one of [E11] to [E13], in which in the excitation light emission step, the excitation light is emitted for each of the excitation wavelength ranges,
in the imaging step, the fluorescence macro image data corresponding to each of the excitation wavelength ranges is output, and
in the setting step, tissue recognition for detecting a region of tissue included in the specimen is performed for each piece of the fluorescence macro image data corresponding to each of the excitation wavelength ranges.

### [E15]

The image acquisition method according to [E11] or [E14], in which in the excitation light emission step, the excitation light is emitted for each of the excitation wavelength ranges,
in the imaging step, the fluorescence macro image data corresponding to each of the excitation wavelength ranges is output, and
in the setting step, a focus measurement position at the time of acquiring a micro image is set for each piece of the fluorescence macro image data corresponding to each of the excitation wavelength ranges.

### [E16]

The image acquisition method according to any one of [E10] to [E15], further including a switching step of taking in and out the fluorescence filter unit with respect to an optical axis of the fluorescence directed to the imaging lens.

### Reference Signs List

- 1: image acquisition apparatus
- 20: control apparatus (setting unit)
- 113: bright-field light source (bright-field illumination unit)
- 114: dark-field light source (dark-field illumination unit)
- 117: second emission unit (excitation light illumination unit)
- 118: imaging lens
- 119: color image sensor (image sensor)
- 120: fluorescence filter unit
- 121: switching unit
- S: sample (specimen)

## Claims

1. An image acquisition apparatus to acquire a macro image of a specimen, the image acquisition apparatus comprising:
an excitation light emission unit configured to obliquely emit excitation light in at least 1 excitation wavelength range among a plurality of excitation wavelength ranges onto the specimen;
a macro observation camera including a fluorescence filter unit having a plurality of reflection wavelength ranges corresponding to the plurality of excitation wavelength ranges and a transmission wavelength range between the reflection wavelength ranges, an imaging lens configured to form an image of fluorescence from the specimen corresponding to the emitted excitation light, and an image sensor configured to capture an optical image formed by the imaging lens and output fluorescence macro image data of the specimen; and
a setting unit configured to set an acquisition condition of a micro image of the specimen, based on the fluorescence macro image data.

2. The image acquisition apparatus according to claim 1, wherein the setting unit sets exposure time at a time of acquiring the micro image, based on the fluorescence macro image data.

3. The image acquisition apparatus according to claim 2, wherein the setting unit extracts a predetermined number of checkpoints having higher luminance than other regions in the fluorescence macro image data, and set the exposure time based on the luminance of the plurality of extracted checkpoints.

4. The image acquisition apparatus according to claim 2 or 3, wherein the excitation light emission unit emits the excitation light for each of the excitation wavelength ranges,
the image sensor is a color image sensor, the color image sensor outputting the fluorescence macro image data corresponding to each of the excitation wavelength ranges, and
the setting unit sets the exposure time for each piece of the fluorescence macro image data corresponding to each of the excitation wavelength ranges.

5. The image acquisition apparatus according to any one of claims 1 to 3, wherein the excitation light emission unit emits the excitation light for each of the excitation wavelength ranges,
the image sensor is a color image sensor, the color image sensor outputting the fluorescence macro image data corresponding to each of the excitation wavelength ranges, and
the setting unit performs tissue recognition for detecting a region of tissue included in the specimen for each piece of the fluorescence macro image data corresponding to each of the excitation wavelength ranges.

6. The image acquisition apparatus according to any one of claims 1 to 3, wherein the excitation light emission unit emits the excitation light for each of the excitation wavelength ranges,
the image sensor is a color image sensor, the color image sensor outputting the fluorescence macro image data corresponding to each of the excitation wavelength ranges, and
the setting unit sets a focus measurement position at the time of acquiring the micro image for each piece of the fluorescence macro image data corresponding to each of the excitation wavelength ranges.

7. The image acquisition apparatus according to claim 1, further comprising a bright-field illumination unit configured to perform bright-field illumination on the specimen.

8. The image acquisition apparatus according to claim 1, further comprising a dark-field illumination unit configured to perform dark-field illumination on the specimen.

9. The image acquisition apparatus according to claim 7 or 8, further comprising a switching unit configured to be able to take in and out the fluorescence filter unit with respect to an optical axis of the fluorescence directed to the imaging lens.

10. An image acquisition method to acquire a macro image of a specimen, the method comprising:
an excitation light emission step of obliquely emitting excitation light in at least 1 excitation wavelength range among a plurality of excitation wavelength ranges onto the specimen;
an imaging step of imaging, using an image sensor, fluorescence generated from the specimen in response to the emitted excitation light and transmitted through a fluorescence filter unit having a plurality of reflection wavelength ranges corresponding to the plurality of excitation wavelength ranges and a transmission wavelength range between the reflection wavelength ranges, and outputting fluorescence macro image data of the specimen; and
a setting step of setting an acquisition condition of a micro image of the specimen, based on the fluorescence macro image data.
